# EUROPÄISCHE PATENTSCHRIFT

(11) **EP 2 773 883 B1**
(45) Veröffentlichungstag und Bekanntmachung des Hinweises auf die Patenterteilung: **30.05.2018**
(21) Anmeldenummer: 12786899.0
(22) Anmeldetag: 02.11.2012
(51) Int. Cl.: F16F 1/36

(54) **ADAPTIVE FESTSTELL- UND LÖSEVORRICHTUNG UND DEREN VERWENDUNG ZUM GESTEUERTEN BLOCKIEREN BZW. FREIGEBEN BEWEGLICHER BAUTEILE**
ADAPTIVE LOCKING AND RELEASING DEVICE AND USE THEREOF FOR THE CONTROLLED BLOCKING AND RELEASING OF MOVABLE COMPONENTS
DISPOSITIF D'IMMOBILISATION ET DE LIBÉRATION ADAPTABLE ET SON UTILISATION POUR BLOQUER OU LIBÉRER SUR COMMANDE DES PIÈCES MOBILES

(30) Priorität: 04.11.2011 DE 102011055060; 16.02.2012 DE 102012202418
(43) Veröffentlichungstag der Anmeldung: 10.09.2014
(73) Patentinhaber: Fraunhofer Gesellschaft zur Förderung der angewandten Forschung e.V., 80686 München (DE)
(72) Erfinder: WEBER, Daniel, 36142 Tann (DE); BÖSE, Holger, 97080 Würzburg (DE); EHRLICH, Johannes, 97355 Wiesenbrunn (DE); SPORN, Dieter, 97082 Würzburg (DE); MÜLLER, Udo, 36041 Fulda (DE)
(74) Vertreter: Strehl Schübel-Hopf & Partner
(86) Internationale Anmeldenummer: PCT/EP2012/071703
(87) Internationale Veröffentlichungsnummer: WO 2013/064621

(56) Entgegenhaltungen:
- CN-A- 101 251 164
- CN-U- 201 902 492
- CN-Y- 200 982 373
- DE-A1-102007 017 588
- DE-A1-102008 010 055
- US-A1- 2006 145 544
- US-A1- 2008 203 760

## Beschreibung

Die Erfindung betrifft eine Vorrichtung zum gesteuerten Blockieren und/oder Freigeben eines beweglichen Teils einer Anlage in Relation zu einem zweiten Teil, z. B. zum Ver- bzw. Entriegeln von Türen, Toren, Fenstern, Klappen, Deckeln und ähnlichen Elementen, die im Folgenden als Feststell- und Lösevorrichtung bzw. als adaptiver Feststeller bezeichnet wird. Des Weiteren betrifft die Erfindung ein Verfahren zum gesteuerten Blockieren und/oder Freigeben von relativ zueinander beweglichen Teilen einer Anlage.

Aus dem Stand der Technik sind Feststellvorrichtungen bekannt, die auf mechanischen und mechanisch-hydraulischen Prinzipien beruhen.

Mechanische Feststeller sind typischerweise in ihren Stellpunkten voreingestellt und in ihrer Mechanik vergleichsweise einfach aufgebaut; sie sind daher auch günstig in der Herstellung. Beispielsweise kommen sie als Türfeststeller bei einer Automobiltür zum Einsatz, welche beim Öffnen an bestimmten Punkten zu fixieren ist. In der Regel sind diese Fixpunkte (zwei oder mehr) vorab eingestellt und können nicht ohne weiteres verändert werden. Damit ist es insbesondere nicht möglich, frei wählbare Zwischenpositionen zu fixieren.

Ein weiterer wichtiger Gesichtspunkt im Zusammenhang mit Fahrzeugtürfeststellern ist eine sichere und zuverlässige Ver- bzw. Entriegelung von Türen im Falle eines Unfalls. Während eines Unfalls, z.B. bei einem Aufprall eines Automobils auf ein Hindernis oder ein anderes Fahrzeug, sollen die Türen geschlossen und verriegelt bleiben. Nachdem das Auto zum Stillstand gekommen ist, sollen die Türen entriegeln und somit zu öffnen sein, damit der Innenraum prinzipiell für die Rettungskräfte zugänglich ist. Herkömmliche mechanische Türfeststellerkonstruktionen sehen dies nicht vor, denn hier sind die Grenzen von rein mechanischen Aufbauten erreicht.

Mechanisch-hydraulische Feststeller können eine Tür auch an beliebigen Punkten fixieren. Bekannte Feststeller dieser Art sind jedoch in ihrer Mechanik sehr komplex und damit auch kostenintensiv. Bekannt ist z.B. ein hydraulischer Türfeststeller der Fa. Stabilus, siehe z. B. DE 10 2009 020 951 A1.

Ferner ist hinsichtlich einer gezielten Beeinflussung bzw. Veränderung eines Fluidstromes DE 10 2008 057 575 bekannt. Bei dem darin beschriebenen Aktor wird durch eine Verformung eines magnetorheologischen Elastomer-Elements im Magnetfeld eine Verengung der Querschnittsfläche eines durch den Aktor fließenden Fluidstroms bewirkt. In spezifischen Ausgestaltungen stellt dieser Aktor der Form nach eine Art Venturi-Düse ohne Abzweigrohr dar. Es handelt sich hierbei um eine reine Fluidstromkontrolle.

In DE 10 2008 038813 A1 wird eine Vorrichtung zum selektiven Steuern und Variieren des Reibungskraftniveaus an einer Grenzfläche zwischen zwei Körpern beschrieben, die mit Hilfe eines "aktiven Materials" erfolgen kann, das nach Anlegen eines Aktivierungssignals eine Änderung einer Eigenschaft erfährt. Für dieses wird eine Vielzahl von Möglichkeiten angegeben; die Aufzählung umfasst auch magnetorheologische Elastomere, ohne dass erläutert wäre, wo und wie diese konkret angeordnet und aktiviert werden könnten.

In US 2006/0145544 A1 ist ein Aktuator, z.B. Motor gezeigt, der mit Hilfe von zwei Klemmvorrichtungen und einer Feder die Translation einer Stange relativ zu sich bewirken kann. Für die Klemmvorrichtung wird dem Grunde nach eine Vielzahl von Materialien vorgeschlagen, darunter auch magnetorheologische Elemente. Wie die Vorrichtung hiermit betrieben werden könnte, wird jedoch nicht offenbart. Die DE 10 2008 010 055 A1 betrifft allgemein ein Verschlussscharnier auf der Basis eines aktiven Materials, eine Arretierung auf der Basis eines aktiven Materials, ein Ausrichtverfahren auf der Basis eines aktiven Materials und im Spezielleren ein Verfahren zum Ausrichten von Verschlüssen mit einem Rahmen. Festzuhalten ist insgesamt, dass weder mechanische noch mechanisch-hydraulische Türfeststeller im Stand der Technik eine stufenlose und auch von außen vorgebbare Regelung ermöglichen, und dass die Verwendung von magnetorheologischen Elastomer-Elementen bisher eher als theoretische Möglichkeit vorgeschlagen wurde.

Der vorliegenden Erfindung liegt die Aufgabe zugrunde, eine Feststell- und Lösevorrichtung und ein Verfahren zum gesteuerten Blockieren und/oder Freigeben eines beweglichen Teils in Relation zu einem zweiten Teil in einer Anlage, wie z. B. einer Tür oder eines Deckels bei einem Fahrzeug bzw. einem Behälter, anzugeben, welche eine stufenlose Steuerung und gegebenenfalls eine Steuerung von außen bei einem vergleichsweise einfachen Aufbau der Feststell- und Lösevorrichtung ermöglichen.

Diese Aufgabe wird durch eine Feststell- und Lösevorrichtung gelöst, die die (mindestens) zwei genannten, relativ zueinander beweglichen Teile, mindestens einen Formkörper aus einem magnetorheologischen Elastomer (MRE) und ein Magnetkreissystem mit mindestens einem magnetfelderzeugenden Element aufweist, wobei der mindestens eine Formkörper (nach Möglichkeit in seiner Gesamtheit; zumindest aber teilweise) Bestandteil des Magnetkreissystems und derart ausgebildet ist, dass er sich beim Anlegen oder Verändern eines Magnetfelds entweder derart ausdehnt, dass die relative Bewegung der Teile durch Kraftschluss und/oder Formschluss blockiert wird, oder sich derart zusammenzieht, dass ausgehend von einer durch Kraftschluss und/oder Formschluss bestehenden Blockade die relative Bewegung der Teile freigegeben wird. Die erfindungsgemäße Feststell- und Lösevorrichtung wird nachstehend auch als adaptiver Feststeller bezeichnet.

Das erfindungsgemäße Prinzip beruht auf der Verformung unter Ausdehnung bzw. Kontraktion von magnetorheologischen Elastomeren und somit von daraus geformten Körpern in einem (insbesondere inhomogenen) äußeren Magnetfeld, das durch ein an bzw. in der Vorrichtung befindliches Magnetkreissystem induziert wird. Diese Verformung beruht auf der Veränderung des Magnetisierungszustandes der im MRE vorhandenen magnetisierbaren Partikel. Geeignet sind vor allem Komposite aus einem nicht-magnetisierbaren elastomeren Trägermedium (Elastomermatrix) und darin enthaltenen magnetisierbaren bzw. magnetischen Partikeln. Bei geeigneten MRE-Materialien für einen adaptiven Feststeller nach der Erfindung ist eine relative Ausdehnung bzw. Kontraktion beim Anlegen bzw. Verändern des Magnetfelds von wenigstens 1%, vorzugsweise von bis zu 5%, besonders bevorzugt von bis zu10 % oder sogar mehr möglich. Bei einer im Hinblick auf den Energieaufwand bei der Magnetfelderzeugung vorteilhaften Ausgestaltung des adaptiven Feststellers bzw. bei dessen Betrieb nimmt die relative Ausdehnung bzw. Kontraktion des Formkörpers Werte etwa zwischen 5% und 10% an.

Zusätzlich zur Ausdehnung bzw. Kontraktion eines Formkörpers aus MRE kann die erfindungsgemäße Blockade der relativen Bewegung von Teilen durch eine Veränderung mechanischer Eigenschaften des MRE-Materials im Magnetfeld unterstützt werden. Als Beispiele hierfür sind vor allem der Schubmodul, der E-Modul, der Speichermodul und der Verlustmodul (die das elastische Verhalten bzw. die Energiedissipation beschreiben) sowie der jeweilige Steigerungsfaktor dieser Parameter im Magnetfeld zu nennen. Mechanische Eigenschaften des MRE sind besonders relevant bei solchen Ausführungsformen des adaptiven Feststellers, in denen der Formkörper einer beträchtlichen mechanischen Belastung ausgesetzt wird. Dies kann unter anderem bei einer Bewegungsblockade durch eine kraftschlüssige Verbindung der Teile mittels des Formkörpers (siehe weiter unten) eine wichtige Rolle spielen.

Beispiele geeigneter MRE-Materialien, deren Herstellung und Eigenschaften sind unter anderem den älteren Anmeldungen der Anmelderin DE 10 2004 041 649 A1, DE 10 2005 034 925 A1, DE 10 2006 016 773 A1, DE 10 2007 028 663 A1 zu entnehmen. Dabei hängt die im Magnetfeld erreichbare Dehnung des MRE-Materials entscheidend von seinen mechanischen Eigenschaften ab, die über die Zusammensetzung und die Herstellung eingestellt werden können.

Für die MRE-Matrix bzw. die Elastomermatrices können gießfähige Elastomermaterialien wie Silicone oder Polyurethane, Thermoplastische Elastomere, Polynorbornene etc. ausgewählt werden. Die Wahl erfolgt je nach den Erfordernissen der Anwendung; die jeweiligen Möglichkeiten und Vorteile sind weiter unten und auch in den genannten Druckschriften genauer angegeben. Technisch weit verbreitet sind darüber hinaus Elastomere aus Natur- und Synthesekautschuk, mit denen bisher jedoch nur relativ geringe Änderungen mechanischer Eigenschaften und eine relativ geringe Ausdehnung im Magnetfeld erreicht werden konnten. Dennoch können auch Elastomere dieser Art, wie z.B. Naturkautschuk, Nitrilkautschuk (NBR), Hydrierter Acrylnitrilbutadien-Kautschuk (HNBR) oder Ethylen-Propylen-Dien-Kautschuk (EPDM), in den Elastomermatrices enthalten sein oder diese ausbilden.

Bei den magnetisierbaren Partikeln können alle aus dem Stand der Technik für MREs bzw. für die magnetorheologischen Flüssigkeiten bekannten Partikel eingesetzt werden. Besonders gut geeignet sind magnetisierbare Teilchen aus weichmagnetischen Materialien, wie z. B. aus weichmagnetischen metallischen Werkstoffen, weichmagnetischen oxidkeramischen Werkstoffen, Mischferriten und/oder jeweilige Mischungen. Vorteilhaft kann aber auch das Auswählen hartmagnetischer Partikel sein, die in einem Magnetfeld magnetisiert werden und nach dem Abschalten des Magnetfeldes eine teilweise Restmagnetisierung behalten und dadurch die bleibende Ausdehnung und ggf. auch die mechanische Belastbarkeit des MRE erhöhen können. Auch auf die geeignete Wahl magnetisierbarer Teilchen und damit verbundene Vorteile wird weiter unten ausführlicher eingegangen und hierfür kann unter anderem ebenfalls auf die genannten Druckschriften verwiesen werden.

Durch die Verformung des Formkörpers beim Anlegen oder Verändern eines Magnetfelds wird erfindungsgemäß die relative Bewegung der prinzipiell bezüglich einander beweglichen Bauteile einer Anlage blockiert bzw. freigegeben. Unter der Blockade der relativen Bewegung der Teile wird im Kontext der Erfindung eine Hemmung dieser Bewegung verstanden, die je nach Stärke der einwirkenden Kräfte die relative Bewegung teilweise beeinträchtigen bis vollständig verhindern kann.

Ob beim erfindungsgemäßen Anlegen des Magnetfelds im adaptiven Feststeller eine Blockade oder, umgekehrt, Freigabe der relativen Bewegung der Teile herbeigeführt wird, hängt vor allem von der gegenseitigen Anordnung des Formkörpers und der Teile, von der Wahl der magnetfelderzeugenden Elemente sowie von der Führung der Magnetfeldlinien in der jeweiligen Ausführungsform ab.

Liegt z.B. bei einer spezifischen Ausgestaltung der erfindungsgemäßen Vorrichtung ein Spalt zwischen dem Formkörper und einem der zu blockierenden Teile ohne Magnetfeld vor, so lässt sich durch eine geeignete Magnetfeldlinienführung eine Ausdehnung des Formkörpers in den Spalt hinein und im Ergebnis eine kraftschlüssige und/oder formschlüssige Verbindung zwischen dem Formkörper und dem Teil beim Anlegen des Magnetfelds erreichen. Alternativ kann bei einer geeigneten Wahl und Anordnung der Bestandteile des erfindungsgemäßen adaptiven Feststellers die relative Bewegung der Teile ohne Magnetfeld blockiert sein und erst durch das Anschalten des Magnetfelds freigegeben werden.

In einem einfachen Fall handelt es sich bei dem adaptiven Feststeller nach der Erfindung um genau zwei Bauteile, wie z.B. einen (z.B. fest mit einer Fahrzeugtür verbundenen) Kolben und ein (z.B. mit dem Türrahmen fest verbundenes) konzentrisches Rohr, das sich beim Öffnen der Tür relativ zum Kolben verdreht oder verschiebt. Es sind aber auch Ausführungsformen möglich, bei denen die relative Bewegung von drei oder mehr Bauteilen untereinander mittels eines oder mehrerer Formkörper kontrolliert blockiert werden kann, z.B. indem der oder die Formkörper jeweils für eine paarweise Bewegungsblockade dieser Bauteile sorgen.

Es können auch zwei oder mehr Formkörper aus einem MRE vorgesehen sein. Ausführungsformen mit mehr als einem Formkörper aus einem MRE können aus Symmetrie- und Stabilitätsgründen von Vorteil sein. Es können aber auch zwei oder mehr Formkörper aus zwei oder mehr verschiedenen MRE eingesetzt werden.

Die beschriebenen Vorgänge sind grundsätzlich reversibel, solange der Magnetisierungszustand und die Anordnung der Partikel beim Abstellen der Magnetfeldänderung in deren ursprünglichen Zustand zurückkehren. Das hängt mit der Elastizität der Verformung der Elastomermatrix zusammen. Dies bedeutet unter anderem, dass die relative Bewegungsfreiheit der Bauteile mit dem adaptiven Feststeller nach der Erfindung grundsätzlich nicht nur blockiert sondern auch wieder freigegeben bzw. dass der ganze Vorgang auch mehrmals wiederholt werden kann. Es sind aber auch Ausführungsformen möglich, bei denen die Herstellung einer Bewegungsblockade für die Teile bzw. deren Lösung auch nur einmal erfolgen sollen.

Die Wahl eines magnetfelderzeugenden Elements ist je nach den Erfordernissen der Anwendung weitgehend frei. Darüber hinaus werden statische oder langsam variierende Magnetfelder nicht durch einen umschließenden Körper aus Metall abgeschirmt. So kann in einer Ausführungsform ein magnetfelderzeugendes Element, wie z. B. ein Permanentmagnet oder ein Elektromagnet, zusätzlich von außen an die erfindungsgemäße Feststell- und Lösevorrichtung herangebracht werden, um innerhalb dieser ein Magnetfeld bzw. eine Magnetfeldänderung zu erzeugen. Dies stellt insbesondere eine einfache Methode dar, die erfindungsgemäße Vorrichtung beispielsweise in Notfällen von außen anzusteuern. Diese und weitere Steuerungsmöglichkeiten werden weiter unten ausführlicher geschildert.

Für adaptive Feststeller gemäß der Erfindung gibt es neben der Fahrzeugtechnik (PKW, LKW, Baumaschinen, Kräne, Züge, Straßenbahnen etc.) insbesondere auch Anwendungen im Maschinenbau, z.B. in der Robotik, ferner in der Medizintechnik, in der Sicherheitstüren-Technik und im privaten Bereich (Haustechnik).

Ein wesentlicher Vorteil des erfindungsgemäßen Prinzips gegenüber dem Stand der Technik besteht in der freien (kontinuierlichen) Wählbarkeit der Positionen, an denen z.B. eine aufgehende Tür fixiert werden soll, und zwar die Wählbarkeit in der Zukunft und nicht im Voraus. Dabei besteht die Möglichkeit, den adaptiven Feststeller mittels der Magnetfeldänderung auf eine kontrollierte Weise an jedem notwendigen Punkt anzuhalten, beispielsweise durch Kopplung mit einem Abstandssensor (z.B. mit einem Radarsensor, Ultraschallsensor oder einem Optischen Messsystem). In dem genannten Beispiel kann dadurch das Anschlagen der Autotür an ein benachbartes Fahrzeug oder einen Absperrpoller grundsätzlich vermieden werden. Die Feststell- und Lösevorrichtung nach der Erfindung lässt darüber hinaus grundsätzlich eine Steuerung von außen zu, wenn dies erforderlich sein sollte.

Schließlich ist für das Grundprinzip eine relativ geringe Anzahl von Konstruktionselementen erforderlich, was einen einfachen und kompakten Aufbau der Vorrichtung möglich macht.

Bevorzugte Ausführungsformen der Erfindung sind in den abhängigen Ansprüchen und in der nachfolgenden Beschreibung angegeben.

In einer ersten bevorzugten Ausführungsform liegt der mindestens eine Formkörper aus einem MRE in der Blockadestellung des adaptiven Feststellers unmittelbar oder mittels eines Zusatzteils kraftschlüssig an beiden Teilen an. Auf diese Weise ist die relative Bewegung der Teile gehemmt bis vollständig blockiert. Der Formkörper aus einem MRE kann dabei entweder beim Ausdehnen oder beim Zusammenziehen die Blockierung zwischen den beiden grundsätzlich zueinander beweglichen Teilen durch einen Kraftschluss zwischen den beiden Teilen erzeugen.

Eine kraftschlüssige Verbindung der (mindestens) zwei Teile wird dadurch erreicht, dass der Formkörper mit jedem der Teile in einem mechanischen Kontakt steht, d. h. jeweils unmittelbar oder mittels eines Zwischenstücks kraftschlüssig daran anliegt. Beispielsweise kann ein auf einer Gleit- bzw. Haftreibung beruhender Kraftschluss erzeugt werden, indem der Formkörper durch seine Verformung mit einem bestimmten Druck an dem jeweiligen Gegenstück anliegt. Ob der Kraftschluss zu einer Gleit- oder Haftreibung führt, wird unter anderem von der Stärke der in Richtung der relativen Bewegung der Teile wirkenden Kräfte und von den relativen Reibungskoeffizienten abhängen: Ab einer gewissen Stärke dieser Gegenkräfte wird die vollständige Blockade gelöst und die Gleitreibung an Stelle der Haftreibung treten.

Vorzugsweise beruht die kraftschlüssige Verbindung zwischen dem Formkörper und mindestens einem der Teile zusätzlich oder ausschließlich auf einem Formschluss, d.h. der Formkörper und das Teil weisen beim Kraftschluss (im obigen allgemeinen Sinne, d.h. bei einem mechanischen Kontakt unter gegenseitiger Krafteinwirkung) zueinander komplementäre Außenflächen, wie z.B. Ausnehmungen und Vorsprünge auf, die ineinander greifen. Möglich ist z. B. eine Vorrichtung, bei der der Formkörper bei seiner Ausdehnung im Magnetfeld mit einer seiner Seiten in einer passenden Ausnehmung des Gegenstücks teilweise versinkt. Die relative Bewegung der betroffenen Elemente wird dadurch typischerweise effektiver blockiert werden können, als bei einem Kraftschluss allein durch Haftreibung.

An dem Formschluss zwischen dem Formkörper und einem der Teile kann/können auch ein oder mehrere Zusatzteil(e) beteiligt sein. Während der Formkörper aus MRE typischerweise relativ weich und flexibel ist, kann für das Zusatzteil ein geeigneter fester Werkstoff gewählt werden, welcher darüber hinaus eine Verarbeitung zu einem erforderlichen Formschlussprofil zulässt. Auf diese Weise kann die Stärke der kraftschlüssigen Verbindung weiterhin gesteigert werden.

Vorzugsweise lässt sich die Stärke der Bewegungsblockade im erfindungsgemäßen adaptiven Feststeller durch Variation der Magnetfeldstärke steuern. Alternativ dazu ist eine einfache Variante, die lediglich ein An- und Abschalten des Magnetfelds einer vorgegebenen Stärke vorsieht. Besonders bevorzugt ist eine kontinuierliche Einstellbarkeit der Magnetfeldstärke und damit der Verformung des Formkörpers und der erfindungsgemäßen Blockierkraft zu einer flexiblen Anpassung an die Anforderungen der Anwendung.

Vorteilhaft ist eine Anordnung des Formkörpers, gegebenenfalls mehrerer Formkörper, zwischen den zu blockierenden Teilen. Zum einen lässt sich dadurch eine kompakte Anordnung des adaptiven Feststellers gemäß der Erfindung realisieren, zum anderen die Anzahl dessen notwendiger Bestandteile reduzieren. Bei Ausführungsformen mit einem auf der Reibung beruhenden Kraftschluss lässt sich durch eine Anordnung des oder der Formkörper zwischen den beiden Teilen zudem die größtmögliche Reibungsfläche erzeugen.

Alternativ dazu kann der Formkörper z. B. seitlich der zu blockierenden bzw. zu lösenden Teile angeordnet sein. Der Formkörper kann in einer solchen Ausführungsform an einem weiteren mechanischen Bauelement derart angeordnet sein, dass er sich im Magnetfeld in Richtung der zu blockierenden Teile ausdehnt, an diesen infolgedessen mit Druck anliegt und sie dadurch an einer relativen Bewegung hindert. Das mechanische Bauelement kann in diesem Fall z. B. eine Klammer sein.

Der Formkörper kann an einem der zu blockierenden Teile befestigt sein. Eine Bewegungsblockade kann in diesem Fall beispielsweise infolge einer Ausdehnung des Formkörpers in Richtung des zweiten Teils erreicht werden. Vorzugsweise entsteht dabei unmittelbar eine kraftschlüssige Verbindung der beiden Teile. Alternativ kann der Formkörper gegebenenfalls auch am Zusatzteil befestigt sein.

In bevorzugten Ausführungsformen der erfindungsgemäßen Feststell- und Lösevorrichtung umschließt eines der beiden Teile den anderen der beiden Teile - oder einen weiteren Teil - zumindest weitgehend. Hierbei oder unabhängig davon wird in den meisten Fällen

im gelösten Zustand der eine Teil gegenüber dem anderen Teil translatorisch bezüglich einer Translationsachse und/oder rotatorisch bezüglich einer - vorzugsweise gemeinsamen - Rotationsachse verschoben.

In einer Feststell- und Lösevorrichtung, bei der die zu blockierenden Teile um eine gemeinsame Achse relativ zueinander verdreht werden können oder bei der die Anordnung der Teile aus einem anderen Grund eine zumindest teilweise Rotationssymmetrie um eine gemeinsame Achse aufweist, ist ein bezüglich dieser Achse ringförmig ausgebildeter Formkörper besonders bevorzugt. Dieser kann auch Ausnehmungen oder Vorsprünge aufweisen.

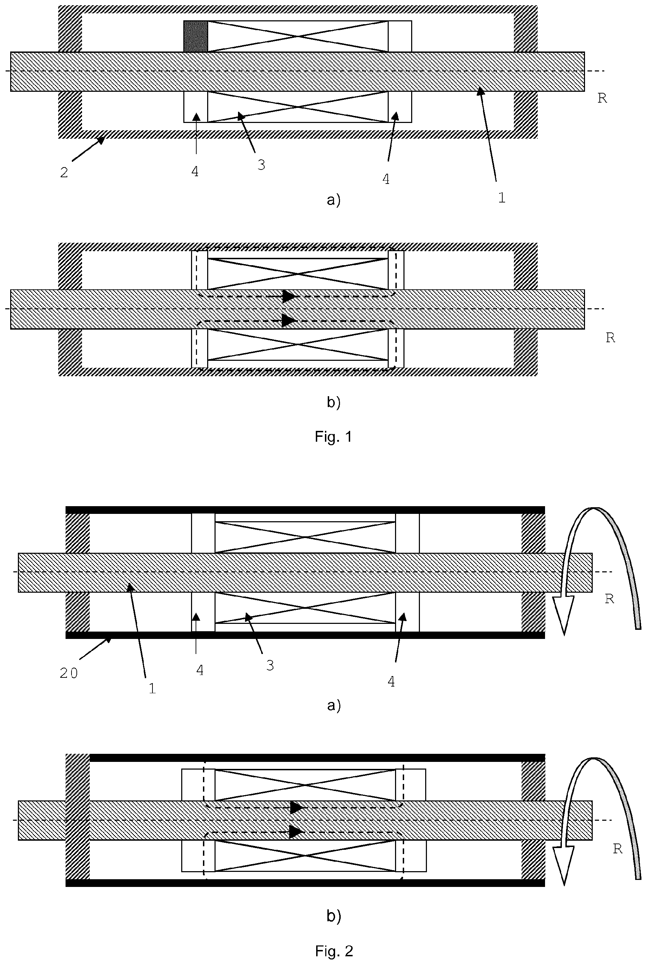

Bei spezifischen Ausgestaltungen mit einer Symmetrieachse kann sich der Formkörper im Magnetfeld z.B. radial (senkrecht zur Symmetrieachse) oder axial (parallel zur Symmetrieachse ausdehnen und beim Abschalten des Magnetfeldes wieder zusammenziehen. Diese zwei unterschiedlichen Varianten sind z.B. in den ersten zwei Ausführungsbeispielen und in den zugehörigen Figuren 1, 2 bzw. 3, 4 weiter unten dargestellt

In einem adaptiven Feststeller nach der Erfindung kann ein Formkörper daher sowohl durch seine Ausdehnung als auch, alternativ, durch das Zusammenziehen in einer bestimmten Richtung die Blockierung der Teile erzeugen. Dies geschieht vorzugsweise dadurch, dass er sich beim Einschalten oder Abschalten des Magnetfeldes entweder weitgehend parallel oder weitgehend senkrecht zu Translations- bzw. Rotationsachse ausdehnt. Das magnetorheologische Elastomer dehnt sich dabei in der Regel entlang oder zumindest in Abhängigkeit eines Magnetfeldgradienten aus. Das MRE-Material wird dabei typischerweise zu den Bereichen mit steigendem Magnetfeldstärkegradienten hin angezogen. Dies gilt typischerweise für MRE-Materialien, welche weichmagnetische Partikel enthalten. In der Regel wird eine Ausdehnung des MRE eine Kontraktion des Formkörpers in den dazu senkrechten Richtungen zur Folge haben. Ausdehnungs- und Kontraktionsrichtungen für den Formkörper lassen sich durch eine geeignete Wahl des Magnetfeldes und seiner Führung beeinflussen.

Sofern mindestens zwei Formkörper vorhanden sind, erfüllen diese beim Einschalten oder Abschalten des Magnetfeldes vorzugsweise synchron die gleiche Funktion, d. h. stellen die beiden Teile entweder synchron fest oder lösen sie synchron.

Wenn die Blockierung der Teile durch ein Zusammenziehen des Formkörpers in einer bestimmten Richtung erzeugt werden soll, kann dies beispielsweise verwirklicht sein, indem sich bei der Kontraktion des Formkörpers ein weiteres mechanisches Element, wie z.B. eine bewegliche Platte oder eine Feder, die am Formkörper bevorzugt mit Druck anliegt, verschiebt und dadurch eine Bewegungsblockade für die Teile erzeugt. Beispielsweise kann dabei ein Formschluss dieses Elements zu den beiden Teilen entstehen. Diese und weitere Möglichkeiten einer erfindungsgemäßen Bewegungsblockade durch das Zusammenziehen des Formkörpers werden weiter unten detaillierter beschrieben.

In dem adaptiven Feststeller nach der Erfindung ist ein magnetfelderzeugendes Element enthalten, mittels dessen ein Magnetkreis aufgebaut und gesteuert werden kann, dessen Magnetfeldlinien in dem mindestens einen Formkörper in einer bestimmten Richtung verlaufen. Weiterhin kann insbesondere bei relativ groß dimensionierten adaptiven Feststellern oder aus Symmetriegründen bei symmetrischen Aufbauten der Einsatz von zwei oder mehr magnetfelderzeugenden Elementen von Vorteil sein.

In spezifischen Ausgestaltungen der erfindungsgemäßen Feststell- und Lösevorrichtung dient ein Elektromagnet mit einer Spule als das magnetfelderzeugende Element. Ein großer Vorteil ist dabei die prinzipielle Möglichkeit, die Stärke des Magnetfelds durch die Stromstärke im Elektromagnet kontinuierlich zu variieren. Ferner ist eine Ankopplung an weitere Steuerungsmittel, wie z. B. an einen Abstandssensor (z.B. an einen Radarsensor, einen Ultraschallsensor oder ein Optisches Messsystem) oder an eine Handbedienung, in diesem Fall direkt möglich. Ein weiterer wichtiger Vorteil besteht bei Vorrichtungen mit einer zumindest teilweisen Axialsymmetrie der zu blockierenden Teile mit einer gemeinsamen Achse in der Rotationssymmetrie einer herkömmlichen Spule. In einer solchen Ausführungsform wird sich beispielsweise der Formkörper, der bis auf mögliche Ausnehmungen ringförmig um dieselbe Achse angeordnet ist, im Magnetfeld der Spule radial (d.h. senkrecht zur Symmetrieachse) ausdehnen und in Richtung parallel zu dieser Achse zusammenziehen oder umgekehrt, sodass eine bezüglich der Symmetrieachse gleichmäßige blockierende Wirkung erzielt werden kann.

Alternativ oder zusätzlich kann ein - nicht selbstständig steuerbarer - Permanentmagnet als magnetfelderzeugendes Element dienen. Das Material hierfür kann der Fachmann in geeigneter Weise auswählen; beispielsweise ist eine Legierung aus Neodym-Eisen-Bor (NdFeB) oder Samarium-Cobalt (SmCo) gut geeignet. Ist der Permanentmagnet die einzige Quelle für die Änderung des Magnetfeldes, kann das An- und Abschalten bzw. die Variation der Magnetfeldstärke dabei beispielsweise durch das Bewegen des Permanentmagneten auf den adaptiven Feststeller zu oder von diesem weg oder aber durch die Verschiebung des Magneten innerhalb des adaptiven Feststellers bewirkt werden. Dies kann z.B. in kleineren oder tragbaren Feststell- und Lösevorrichtungen von Vorteil sein, z.B. wenn keine Stromquelle für den Magneten in der Nähe ist. Ist der Permanentmagnet zusätzlich zum Elektromagneten vorhanden, überlagert sich das vom Elektromagneten erzeugte Magnetfeld mit dem des Permanentmagneten. Der Vorteil dieser Konstruktion kann darin gesehen werden, dass mit dem Permanentmagneten eine spezifische, gewünschte Form des magnetorheologischen Elastomeren aufrechterhalten werden kann, ohne dass der Vorrichtung dauerhaft Energie in Form von Strom zugeführt werden müsste.

In einer weiteren Ausführungsform der Erfindung enthält die Feststell- und Lösevorrichtung anstelle des Permanentmagneten einen schaltbaren Hartmagneten, der aus beliebigem geeignetem Material, beispielsweise und bevorzugt aus einer Aluminium-Nickel-Cobalt-Legierung, gebildet sein kann. Dieser Magnet weist dieselben Eigenschaften wie der zuvor beschriebene Permanentmagnet auf, mit der Ausnahme, dass mit Hilfe des Elektromagneten das Feld des Hartmagneten - z.B. im Falle der AINiCo-Legierung aufgrund von dessen niedriger Koerzitiv-Feldstärke - verändert werden kann, welches dann nach Abschalten des Elektromagneten dauerhaft präsent bleibt.

Bevorzugt für die vorliegende Erfindung ist die Nutzung eines Elektromagneten, ggf. in Kombination mit einem Permanentmagneten und/oder einem schaltbaren Hartmagneten. Es können auch ein oder mehrere Elektromagnete mit einem oder mehreren Permanentmagneten und/oder einem oder mehreren schaltbaren Hartmagneten kombiniert werden, um eine größtmögliche Flexibilität in den genannten Aspekten zu gewährleisten.

Das magnetfelderzeugende Element kann an einem der zu blockierenden Teile befestigt sein. Alternativ dazu bietet es sich bei den Ausführungsformen mit einem Zusatzteil an, den Magneten daran zu befestigen.

In einer zweiten bevorzugten Ausführungsform weist die erfindungsgemäße Feststell- und Lösevorrichtung einen Raum auf, der mit einem fluiden Medium, z.B. mit einem Gas oder einer Flüssigkeit, gefüllt ist. Eine solche Vorrichtung ermöglicht eine Blockade bzw. Freigabe der relativen Beweglichkeit der Teile mit pneumatischen bzw. hydraulischen Mitteln.

Auch Kombinationen der beiden bevorzugten Ausführungsformen, d.h. Kombinationen einer kraftschlüssigen Verbindung und pneumatisch/hydraulischer Mittel zur erfindungsgemäßen Blockade oder Freigabe der beweglichen Teile mittels eines Formkörpers, sind möglich, wobei nur einige davon in den nachfolgenden Beispielen genannt und gezeigt werden.

Vorzugsweise weist die Feststell- und Lösevorrichtung zwei Kammern auf, die durch einen Kanal miteinander verbunden sind, durch welchen das fluide Medium aus einer Kammer in die andere fließen kann und welcher in der Blockadestellung der erfindungsgemäßen Vorrichtung durch einen oder mehrere Formkörper teilweise oder vollständig verschlossen ist. Beispielsweise wird der Formkörper entweder beim Ausdehnen oder beim Zusammenziehen eine Öffnung verschließen, durch die das Fluid sonst bei der relativen Bewegung der Teile hindurchströmen würde. Die Blockierung beruht dann vor allem auf einer Druckdifferenz zwischen den beiden Kammern, die sich bei einer Verschiebung der Teile gegeneinander rasch aufbaut, weil der Kanal teilweise oder ganz geschlossen ist. Der Fluidkanal kann auch teilweise oder ganz außerhalb der Vorrichtung verlaufen. Weiterhin kann auch die Hinzunahme weiterer Kammern von Vorteil sein.

Vorzugsweise ist der Formkörper an einer oder mehreren seiner nicht zum Anliegen an den Teilen vorgesehenen Außenflächen durch eine oder mehrere Platten (bzw. Wände) mechanisch geschützt, wobei die Platten/Wände bevorzugt bezüglich der Teile beweglich sind und bevorzugt mit Druck an dem Formkörper anliegen. Diese Maßnahmen beugen zum einen einem möglichen vorzeitigen Verschleiß des Formkörpers vor, zum anderen unterstützen sie die mechanischen Funktionen des Formkörpers bei der Herstellung bzw. Lösung der erfindungsgemäßen Bewegungsblockade.

In einer vorteilhaften Ausführungsform weist der adaptive Feststeller ein oder mehrere Federelemente, z.B. eine Blatt- oder Tellerfeder, auf, mittels derer der Formkörper mechanisch vorgespannt ist. Dadurch kann die erfindungsgemäße Funktion der Vorrichtung verbessert werden. Die Wahl zwischen einem oder mehreren Federelementen erfolgt je nach Anordnung und Anzahl der Formkörper, wobei beispielsweise zwei Federelemente den Formkörper an seinen entgegengesetzten Stirnflächen mit Druck belegen.

Das mindestens eine Federelement kann ferner in Kombination mit der mindestens einen Platte/Wand zur Erzeugung einer kraftschlüssigen Verbindung der zu blockierenden Teile durch die Verformung des Formkörpers eingesetzt werden, vorzugsweise mittels eines Zusatzteils. Dadurch kann der Formkörper zusätzlich mechanisch geschützt und in seiner erfindungsgemäßen Funktion unterstützt werden.

In einer spezifischen Ausgestaltung schützt die Feder zur Vorspannung in Kombination mit der beweglichen Wand/Platte das Elastomer bei seiner maximalen Bewegung durch eine formschlüssige Verbindung der Platte/Wand mit anderen mechanischen Bauteilen.

In spezifischen Ausgestaltungen weist die erfindungsgemäße Feststell- und Lösevorrichtung zwei oder sogar mehr Formkörper aus einem oder verschiedenen magnetorheologischen Elastomeren auf. Dies ist besonders bei länglichen Aufbauten von Vorteil. Die zwei oder mehr Formkörper können in solchen Fällen an den entgegengesetzten Enden der Vorrichtung angeordnet sein, wodurch eine erhöhte Stabilität und Effektivität in Bezug auf die Größe der MRE-Formkörper erreicht werden kann.

Vorzugsweise werden für das MRE oder für verschiedene MREs der erfindungsgemäßen Feststell- und Lösevorrichtung elastomere Trägermedien eingesetzt, die einen Schubmodul < 500 kPa gemessen bei einer Frequenz von 10 Hz und einer Deformation von 1%, bevorzugt < 250 kPa, aufweisen. Damit lassen sich Steigerungen im Schubmodul um den Faktor 100 oder mehr erreichen. Für weitere Details wird im Folgenden auf DE 10 2004 041 649 A1, DE 10 2005 034 925 A1, DE 10 2006 016 773 A1, DE 10 2007 028 663 A1 verwiesen.

Ausgezeichnete Eigenschaften der resultierenden MRE in Magnetfeldern können dadurch erzielt werden, dass besonders "weiche elastomere Trägermedien" eingesetzt werden. Unter derartigen weichen elastomeren Trägermedien werden solche verstanden, die neben dem vorstehend beschriebenen Schubmodul eine Schorehärte A von unter 20, bevorzugt unter 10 und einen Elastizitätsmodul < 1500 kPa, bevorzugt < 750 kPa aufweisen. Eine Besonderheit solcher MRE besteht darin, dass bei einer Verringerung des Vernetzungsgrades im Elastomer zwar der Grundschubmodul erwartungsgemäß abnimmt, der Schubmodul in einem starken Magnetfeld teilweise aber überraschenderweise zunimmt.

Elastomere dieser Art sind käuflich erhältlich, z.B. bei Bayer AG oder Wacker-Chemie GmbH. Die Elastomere können dabei so hergestellt werden, dass ausgehend von den flüssigen Edukten eine thermische oder photochemische Vernetzung durchgeführt wird, wobei die Edukte so ausgelegt sind, dass ein der obigen Ausführung entsprechender Vernetzungsgrad und Schubmodul eingestellt wird. Beispielsweise kann hierfür eine Schwefelvernetzung eingesetzt werden.

Dabei enthält das elastomere Trägermedium bevorzugt Silicon oder Polyurethan.

Silicon-Elastomere werden beispielsweise durch Polyaddition von langkettigen, vinylgruppenhaltigen Dimethylsiloxan-Polymeren mit kurzkettigen, silanhaltigen Dimethylsiloxan-Polymeren hergestellt. Je nach Lage der Silan-Gruppen werden die Polymere zu Ketten verlängert oder zu einem dreidimensionalen Netzwerk vernetzt. Durch Variation des Silan-Anteils kann das bei der Vernetzung entstehende Silicon-Elastomer in seinem Vernetzungsgrad und somit in seinen Modulwerten eingestellt werden. Durch die Zugabe eines Weichmachers, wie z. B. eines Siliconöls, kann die Härte des Elastomers ebenfalls beeinflusst werden.

Polyurethan-Elastomere werden beispielsweise durch Polyaddition von Hydroxyl- mit CyanatGruppen synthetisiert. Die Funktionalität der Cyanat- oder Hydroxyl-Reagenzien bestimmen hierbei den Vernetzungsgrad: Bifunktionelle Edukte verlängern die Molekülketten, trifunktionelle Edukte bilden dreidimensionale Vernetzungsstellen.

Weiterhin kann ein elastisches Trägermedium aus einem oder mehreren Naturkautschuk- und/oder Polynorbornen-Typen ausgewählt werden. Die Grundsteifigkeit eines solchen Elastomerkomposits mit magnetisierbaren Partikeln ohne äußeres Magnetfeld kann durch den gewählten Naturkautschuk / das gewählte Polynorbornen, den Grad und die Art der chemischen Vernetzung, die Zugabe eines Weichmachers sowie die magnetisierbaren Partikel beeinflusst werden. Die zugegebenen Vernetzungsmittel sind dabei beispielsweise organische Peroxide und/oder Schwefel-Systeme. Die mechanischen Eigenschaften wie z. B. der Speichermodul derartiger Elastomerkomposite lassen sich in Abhängigkeit eines externen Magnetfeldes bis zu etwa zwei Größenordnungen schnell und reversibel steigern.

Vorteilhaft kann ferner die Wahl von mindesten einem thermoplastischen Elastomer zum Bilden einer thermoplastischen Elastomermatrix sein. Als thermoplastische Elastomere können insbesondere Styrol-Block-Copolymere gewählt werden, z.B. Styrol-Olefin-Block-Copolymere oder deren Mischungen.

Weitere Beispiele für eine geeignete Elastomermatrix sind solche, die Nitrilkautschuk (NBR), Hydrierten Acrylnitrilbutadien-Kautschuk (HNBR) oder Ethylen-Propylen-Dien-Kautschuk (EPDM) enthalten oder daraus bestehen.

Vorzugsweise sind dabei in der Elastomermatrix mindestens 10 Gew.-% Weichmacher, bezogen auf die Elastomere, enthalten. Das bedeutet, der Weichmacher ist nicht lediglich in geringen Mengen als Additiv im MRE enthalten, sondern er wird als strukturbildende Komponente in größeren Mengen der Elastomermatrix zugesetzt. Durch die Einarbeitung derart großer Mengen an Weichmachern wird eine sehr niedrige Grundhärte des Elastomers eingestellt, die dann besonders hohe Steigerungsraten mechanischer Eigenschaften, wie z.B. der Reißdehnung, bis zu 1000%, oder des Schubmoduls im Magnetfeld ermöglichen. Ein weiterer Vorteil besteht in einer relativ leichten Verarbeitbarkeit solcher Materialien bei Herstellungsverfahren wie Extrudieren oder Spritzgießen. Als Weichmacher können paraffinische oder naphthenische Öle mit 20 bis 300 Gew.-%, besonders bevorzugt mit 30 bis 200 Gew.-%, bezogen auf die thermoplastischen Elastomere, eingesetzt werden.

Wie eingangs erwähnt, können für das eine oder die mehreren MREs im erfindungsgemäßen Feststeller grundsätzlich alle im Zusammenhang mit den magnetorheologischen Elastomeren bzw. Elastomerkompositen und den magnetorheologischen Flüssigkeiten bekannten magnetisierbaren Partikel eingesetzt werden.

Vorzugsweise sind dies magnetisierbare Partikel aus weichmagnetischen Materialien. Beispiele hierfür sind: Weichmagnetische Werkstoffe wie Eisen, Kobalt, Nickel (auch in nicht-reiner Form) und Legierungen daraus wie Eisen-Kobalt, Eisen-Nickel, magnetischer Stahl, Eisen-Silizium und/oder deren Mischungen. Weiterhin können magnetisierbare Teilchen aus weichmagnetischen oxidkeramischen Materialien gewählt werden, wie kubische Ferrite, Perowskite und Granate der allgemeinen Formel: MO.Fe₂O₃ mit einem oder mehreren Metallen aus der Gruppe Mn, Fe, Co, Ni, Cu, Zn, Ti, Cd oder Magnesium und/oder Mischungen davon. Auch können Mischferrite wie MnZn-, NiZn-, NiCo-, NiCuCo-, NiMg-, CuMg-Ferrite und/oder deren Mischungen eingesetzt werden, oder auch Partikel aus Eisencarbid, Eisennitrid, Legierungen von Vanadium, Wolfram, Kupfer und Mangan und/oder deren Mischungen.

Vorzugsweise werden magnetische Partikel in dem mindestens einen MRE der vorliegenden Erfindung aus Eisen, wobei Carbonyleisen besonders bevorzugt ist, aus Cobalt, aus Nikel, aus einer Eisenlegierung, wie z.B. Eisen/Cobalt oder Eisen/Nickel gewählt. Vorteilhaft kann auch die Wahl magnetischer Partikel aus Eisenoxid, wie z.B. aus Magnetit, sein. Es können auch magnetische Teilchen aus Ferrit, wie z.B. aus Manganzinkferrit, eingesetzt werden. Auch Mischungen der genannten Partikelarten können geeignet sein.

Ferner können als magnetisierbare Teilchen auch hartmagnetische Partikel ausgewählt werden. Bei resultierenden magnetorheologischen Kompositen ist eine permanente mechanische Verstärkung der Kompositmatrix, insbesondere deren Grundsteifigkeit, auch durch ein nur kurzzeitig angelegtes Magnetfeld durch die bleibende Restmagnetisierung der Partikel möglich. Beispielsweise wird zu diesem Zweck mindestens ein hartmagnetischer Werkstoff gewählt aus der Gruppe bestehend aus Legierungen basierend auf Al-Ni-Co, AI-Ni-Co-Fe-Ti, Cr-Fe-Co, Fe-Co-V-Cr, Pt-Co, Cu-Ni-Fe, Seltenerdverbindungen wie RE-Co, RE-Fe-B, RE-Fe-N, wobei RE = Sm, Ce, Pr, Nd und/oder Dy ist, z.B. Nd-Fe-B, Nd-Pr-Fe-Co-Ti-Zr-B, Pr-Fe-Co-Nd-B, Sm-Fe-N; Hartferriten, bevorzugt gemäß der Formel M^{l}O·nFe2O3, wobei M^{l} = Ba, Sr und/oder Pb und bevorzugt 4,5 ≤ n ≤ 6,5 sowie Mischungen und/oder Legierungen davon.

Insbesondere kann auch eine Kombination weichmagnetischer und hartmagnetischer Partikel in einem MRE-Material für die Feststell- und Lösevorrichtung nach der Erfindung von Vorteil sein.

Der Einfluss der magnetisierbaren Teilchen auf die relative Ausdehnung des MRE im Magnetfeld, auf seine Grundsteifigkeit und andere mechanischen Eigenschaften hängt von der Volumenkonzentration, aber auch von der Art der Partikel, der Partikelgrößenverteilung und der Partikelform ab. Die bevorzugte mittlere Partikelgröße liegt dabei im Bereich von 5 nm bis 10 mm, besonders bevorzugt zwischen 10 nm und 1 mm. Die Partikelgrößenverteilung kann auch bimodal sein. Die Volumenkonzentration der Teilchen bezogen auf das Gesamtvolumen des Kompositmaterials kann dabei in einer vorteilhaften Ausführungsform des Feststellers zwischen 1 und 70%, besonders bevorzugt zwischen 10 und 50% variieren.

Bei den MRE-Materialien in der erfindungsgemäßen Feststell- und Lösevorrichtung können die magnetisierbaren Partikel isotrop oder anisotrop in der Elastomermatrix verteilt sein.

Vorteilhaft kann die Wahl einer anisotropen Anordnung sein, die dadurch erreicht wird, dass den magnetisierbaren Teilchen bereits vor und/oder während der Vernetzung durch Anlegen eines Magnetfeldes eine kettenförmige Struktur entlang der Feldlinien eingeprägt wird. Durch die Stärke des vor bzw. während der Vernetzung herrschenden Magnetfeldes lassen sich Feinheiten der eingeprägten Struktur vorgeben.

Es kann aber auch eine isotrope Anordnung bevorzugt sein. Eine gleichmäßige Verteilung der Teilchen in der Elastomermatrix wird ohne Anlegen eines Magnetfeldes durch sorgfältiges Homogenisieren erreicht.

Die Möglichkeit der anisotropen bzw. isotropen Anordnung der magnetisierbaren Partikel in der Elastomermatrix hat bei den MRE-Materialien des erfindungsgemäßen Feststellers eine wichtige Bedeutung. Damit können die mechanischen Grundeigenschaften der MREs, aber auch deren Veränderung beim Anlegen bzw. Verändern eines Magnetfeldes zusätzlich eingestellt werden.

Geeignete magnetorheologischen Elastomere können bevorzugt auch aus dem Stand der Technik bekannte Additive, wie z.B. Dispergiermittel, Antioxidantien, Entschäumer, Weichmacher und/oder Antiverschleißmittel, enthalten.

Eine vorteilhafte Zusammensetzung geeigneter MREs ist wie folgt:
- der Anteil der magnetisierbaren Partikel beträgt zwischen 5 und 70 Vol.-%, bevorzugt zwischen 10 und 60 Vol.-%.
- der Anteil des elastomeren Trägermediums beträgt zwischen 20 und 95 Vol.-%, bevorzugt zwischen 30 und 90 Vol.-%.
- der Anteil der Additive beträgt bis zu 20 Masse-%, bevorzugt zwischen 0,01 und 15 Masse-%, bezogen auf die magnetisierbaren Feststoffe.

In einem weiteren Aspekt bezieht sich die Erfindung auf ein Feststell- und Lösevorrichtungskit, welches eine erfindungsgemäße Feststell- und Lösevorrichtung und zusätzlich ein oder mehrere magnetfelderzeugende Elemente aufweist, insbesondere einen Permanentmagneten und/oder einen Elektromagneten. Für adaptive Feststeller nach der Erfindung, die keinen eigenen Magneten enthalten, liefert das Kit die Ausrüstung zum gesteuerten Anlegen bzw. Verändern des Magnetfelds, wie eingangs bereits erwähnt. Für Vorrichtungen mit einem eingebauten Magnetkreis gibt das Kit ferner die Möglichkeit, die Stärke und die Verteilung des Magnetfelds innerhalb der Vorrichtung zusätzlich zu variieren. Es ist z.B. möglich, einen Magneten von außen anzubringen, welcher das Magnetfeld und seinen Gradienten verändert. Der nun vorliegende Gradient kann das MRE in eine andere Richtung bewegen. Ein solches Kit kann auch in Notsituationen hilfreich sein, z.B. wenn die Vorrichtung bzw. der eingebaute Magnet entweder zu schwach oder zu stark oder aber außer Betrieb ist. Vorzugsweise weist das Kit magnetfelderzeugende Elemente unterschiedlicher Magnetfeldstärke, insbesondere zwei oder mehr Permanentmagnete unterschiedlicher Magnetfeldstärke oder unterschiedlich dimensionierte Elektromagnete auf.

Ein weiterer Aspekt der vorliegenden Erfindung ist ein Betriebsverfahren zum gesteuerten Blockieren und/oder Freigeben von relativ zueinander beweglichen Teilen einer Anlage unter Verwendung der erfindungsgemäßen Feststell- und Lösevorrichtung und/oder des Feststell- und Lösevorrichtungskits. Dabei wird ein Magnetfeld innerhalb des Formkörpers derart angelegt oder verändert, dass sich der Formkörper infolgedessen verformt und die Vorrichtung dadurch aus einer Blockadestellung in eine Stellung übergeht, in der die Bewegungsfreiheit der blockierten Teile wiederhergestellt ist, oder umgekehrt. Vorzugsweise wird die Stärke der Blockade in der Blockadestellung durch die Variation der Magnetfeldstärke gesteuert.

Weitere Vorteile der Erfindung werden nachfolgend anhand der in den Zeichnungen und der zugehörigen Beschreibung dargestellten Ausgestaltungen und -beispiele erläutert. Diese sollen keine beschränkende Wirkung für den Erfindungsgegenstand haben, sondern als konkrete Beispiele dafür dienen. Insbesondere sind die Figuren schematische Darstellungen, die nicht maßstabsgetreu zu lesen sind.

Es zeigen:
- Fig. 1a): eine erste Ausgestaltung der erfindungsgemäßen Feststell- und Lösevorrichtung mit kraftschlüssigem Prinzip im gelösten Zustand ohne Magnetfeld
- Fig. 1b): die Feststell- und Lösevorrichtung aus Fig. 1a) im blockierten Zustand mit Magnetfeld
- Fig. 2a): eine zweite Ausgestaltung mit kraftschlüssigem Prinzip im blockierten Zustand ohne Magnetfeld
- Fig. 2b): die Feststell- und Lösevorrichtung aus Fig. 2a) im freigegebenen Zustand mit Magnetfeld
- Fig. 3a): eine dritte Ausgestaltung der erfindungsgemäßen Feststell- und Lösevorrichtung mit hydraulischem/pneumatischem Prinzip im gelösten Zustand
- Fig. 3b): die Feststell- und Lösevorrichtung aus Fig. 3a) im blockierten Zustand
- Fig. 4a): eine vorteilhafte Weiterbildung der dritten Ausgestaltung im gelösten Zustand
- Fig. 4b): die Feststell- und Lösevorrichtung aus Fig. 4a) im blockierten Zustand
- Fig. 5a): eine vierte Ausgestaltung der erfindungsgemäßen Feststell- und Lösevorrichtung Erfindung im gelösten Zustand
- Fig. 5b): die Feststell- und Lösevorrichtung aus Fig. 5a) im blockierten Zustand
- Fig. 6: eine Variante der Ausgestaltung gemäß Fig. 2 zeigt, in der die Magnetflussführung für den Lösevorgang verbessert ist,
- Fig. 7: eine Variante des Lösevorgangs durch eine axiale Stauchung (Fig. 7a): blockierte Stellung; Fig. 7b): gelöste Stellung), ebenfalls mit verbesserter Magnetflussführung,
- Fig. 8: eine Variante der Ausgestaltung von Fig. 1, hier jedoch ohne Magnetfeld im blockierten Zustand mit Formschluss und mit Magnetfeld im gelösten Zustand,
- Fig. 9: eine Blockiervorrichtung mit axialer Ausdehnung des MRE-Formkörpers und Blockade ohne, Lösung mit Magnetfeld,
- Fig. 10: eine Blockiervorrichtung wie in Fig. 9 gezeigt, jedoch in gelöster Form ohne und blockiert mit Magnetfeld,
- Fig. 11: eine weitere Variante mit axialer Ausdehnung des MRE-Formkörpers insbesondere für rotatorische Ausgestaltungen, in gelöster Form ohne und blockiert mit Magnetfeld,
- Fig. 12: eine Variante mit axialer Ausdehnung des MRE-Formkörpers insbesondere für rotatorische Ausgestaltungen, in blockierter Form ohne und gelöst mit Magnetfeld,
- Fig. 13: eine spezifische Variante mit axialer Ausdehnung des MRE-Formkörpers, die ohne Magnetfeld den blockierten Zustand und mit Magnetfeld den freigegebenen Zustand einnimmt, und
- Fig. 14: eine spezifische Ausgestaltung mit zusätzlichem schaltbarem Hartmagneten.

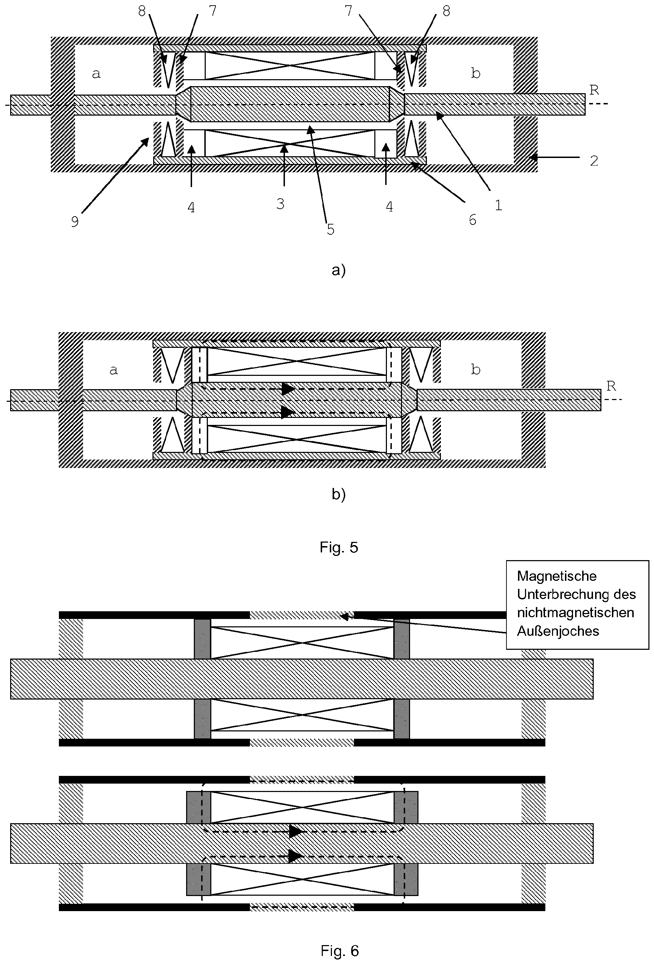

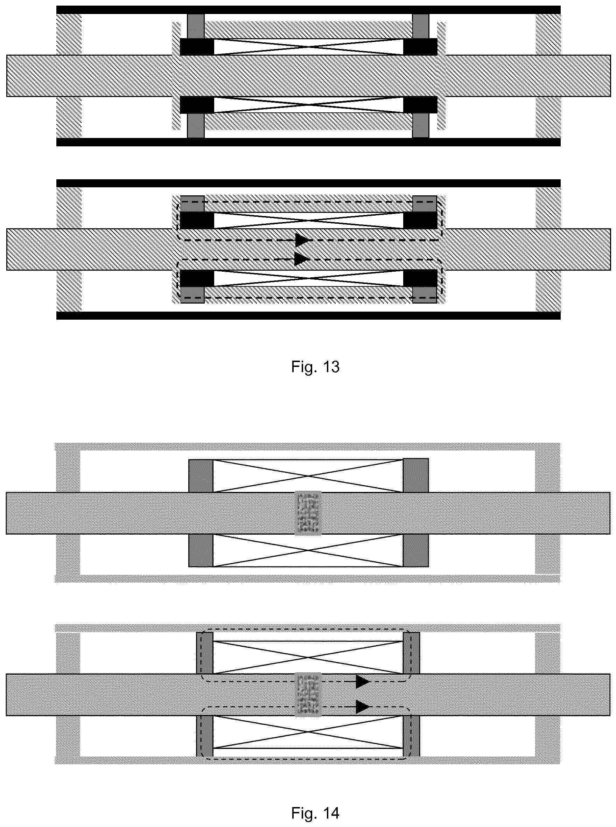

In den Figuren stehen schwarz gefüllte Bereiche für magnetisch isolierende bzw. nicht magnetische Bestandteile und schraffierte Bereiche für magnetische Bestandteile. Die gekreuzte Fläche symbolisiert die Spule eines Elektromagneten. In den Figuren 1 bis 5 ist das magnetorheologische Elastomer durch eine weiße Fläche gekennzeichnet; in den Figuren 6 bis 14 ist dieses Elastomer dunkelgrau dargestellt. Der Hartmagnet in Fig. 14 ist mit einer textil wirkenden Füllung gekennzeichnet. Es sollte klar sein, dass die als magnetisch leitend gezeigten Komponenten nur soweit magnetisch leitendes Material aufweisen müssen, als es für den Aufbau der Magnetfeldlinien erforderlich ist.

In Fig. 1 ist eine erste Ausgestaltung der erfindungsgemäßen Feststell- und Lösevorrichtung dargestellt, die auf einem kraftschlüssigen Prinzip beruht. Dabei handelt es sich, wie in Fig. 1a) gezeigt, um einen Aufbau aus zwei relativ zueinander beweglichen Teilen (1), (2), die horizontal entlang der Symmetrieachse R verschoben werden können. Der Aufbau besteht hier aus einer Kolbenstange 1, auf der ein magnetfelderzeugendes Element 3 sitzt (hier eine Spule, kann aber durch einen Permanentmagneten oder eine Kombination daraus ersetzt werden) und stirnseitig an der Spule 3 jeweils ein Formkörper 4 aus einem MRE. Diese Kombination kann gegen die Außenhülle 2 aus einem magnetischen Material, wie z.B. aus Eisen, Nickel oder einem einfachen Stahl, waagerecht entlang der Achse R verschoben werden.

Der jeweilige Formkörper 4, hier z.B. in Form eines Rings, kann dabei als Block in einer Form gegossen werden, bzw. durch Spritzgießen oder ein anderes Verfahren der Elastomertechnik gefertigt werden.

In Fig. 1b) ist die Feststell- und Lösevorrichtung aus Fig. 1a) im blockierten Zustand dargestellt. Die Kolbenstange 1, der Formkörper 4 und die Außenhülle 2 bilden einen magnetischen Kreis aus. Der Formkörper 4 dehnt sich beim Anlegen eines Magnetfeldes radial aus und bildet mit der Außenhülle 2 eine kraftschlüssige Verbindung. Die Bewegungsfreiheit des inneren Kolbens 1 wird dadurch gehemmt und es wird eine höhere Kraft benötigt, um den inneren Kolben 1 zu verschieben. Der Vorgang ist reversibel, d.h. nach dem Abschalten des Magnetfeldes kehrt das MRE und damit der Formkörper 4 in seinen Ausgangszustand wie in Fig. 1a) zurück.

In Fig. 2 ist eine zweite Ausgestaltung des adaptiven Feststellers dargestellt, bei dem die Blockierung ohne Magnetfeld erfolgt und beim Anlegen eines Magnetfeldes aufgehoben wird. Die beiden MRE-Ringe 4 liegen in Fig. 2a) sowohl innen an der Kolbenstange 1 als auch an der Außenhülle 20 an und stellen somit eine kraftschlüssige Verbindung zwischen der Außenhülle 20 und dem inneren Teil mit Kolbenstange 1 dar. Eine axiale Verschiebung der Außenhülle 20 gegenüber dem inneren Teil mit Kolbenstange 1 wird damit verhindert, d. h. die Feststellvorrichtung befindet sich ohne Anlegen eines Magnetfeldes im blockierenden Zustand.

In Fig. 2b) ist das Lösen der MRE-Ringe 4 von der Außenhülle 20 und somit die Aufhebung der Blockade durch Anlegen eines Magnetfeldes gezeigt. Wichtig in diesem Betriebsmodus ist die nichtmagnetische Außenhülle 20 (beispielsweise aus einem nichtmagnetischen Stahl, wie z.B. geeignetem Edelstahl, oder aus Kunststoff etc.), weil durch den so entstehenden offenen Magnetkreis ein stark inhomogenes Magnetfeld erzeugt wird. Dieses ist an der Kolbenstange 1 besonders stark und wird radial zur Außenhülle 20 hin schwächer. Durch den entstehenden Gradienten des Magnetfeldes ziehen sich die MRE-Ringe 4 radial nach innen zusammen; dabei werden sie aufgrund des Volumenerhalts in Axialrichtung in die Breite gedrückt.

Aufgrund der Rotationssymmetrie kann in der ersten und zweiten Ausgestaltung auf eine analoge Weise die relative Drehbewegung der Kolbenstange 1 und der Außenhülle 2 bzw. 20 um die Rotationsachse R blockiert bzw. freigegeben werden. Diese Variante ist durch Drehpfeile beispielhaft in Fig. 2 angedeutet.

Wird die nichtmagnetische Außenhülle 20 durch ein magnetisches Joch unterbrochen, wie in Fig. 6 gezeigt, führt dies zu einer Verbesserung des Lösevorgangs. Das Lösen der beweglichen Teile geschieht hier wie in Fig. 2 durch eine radiale Stauchung des Formkörpers.

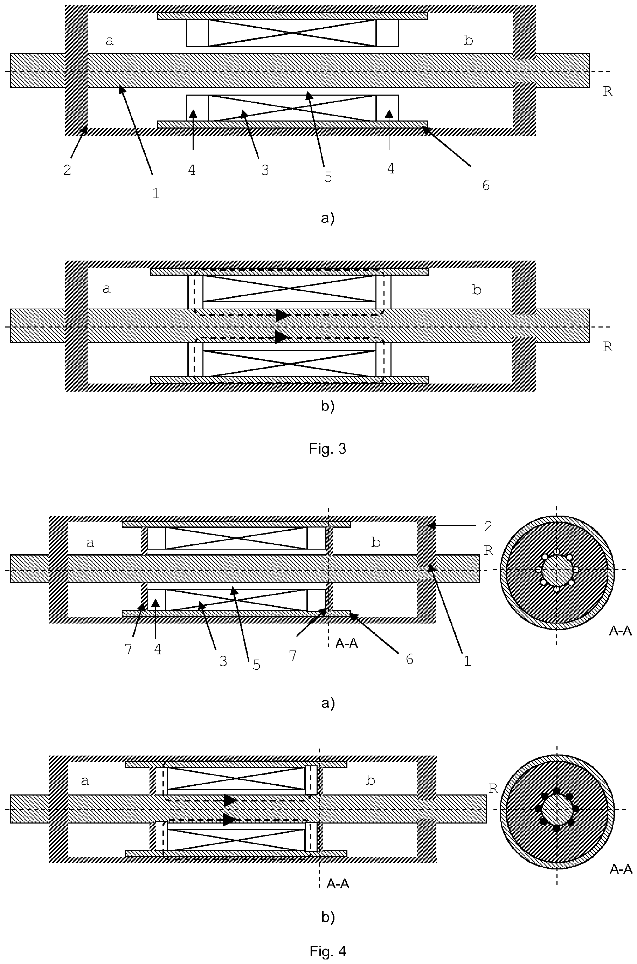

In Fig. 3 ist eine dritte Ausgestaltung der erfindungsgemäßen Feststell- und Lösevorrichtung mit einem innen liegenden Strömungskanal 5 dargestellt. Auf einem Innenkolben 6 sind der Formkörper 4 und das magnetfelderzeugende Element 3 (hier eine Spule, kann aber durch einen Permanentmagneten oder eine Kombination daraus ersetzt werden) montiert. Der Innenkolben 6 kann in Fig. 3a) horizontal entlang der Symmetrieachse R gegen die Außenhülle 2 verschoben werden. Vor bzw. hinter dem Innenkolben 6 entstehen Kammern (a und b), welche mit einem Gas, einem hydraulischem Medium oder Ähnlichem gefüllt sein können. Bei Bewegung des Innenkolbens 6 gegen die Außenhülle 2 wird das Medium durch den Strömungskanal 5 von einer Kammer in die andere gefördert, wodurch ein Druckausgleich erfolgt. Eine Anordnung mit außen liegendem Strömungskanal 5 ist ebenfalls möglich.

In Fig. 3b) ist die dritte Ausgestaltung der Feststell- und Lösevorrichtung im blockierten Zustand dargestellt. Der Innenkolben 6 bildet zusammen mit dem Formkörper 4 und der Kolbenstange 1 einen magnetischen Kreis aus. Beim Anlegen eines Magnetfeldes dehnt sich der Formkörper 4 radial aus und verschließt den Strömungskanal 5. Der Verschluss des Strömungskanals 5 durch den Formkörper 4 kann abhängig von der Stärke des Magnetfeldes teilweise oder vollständig bis zum kompletten Blockieren geschehen. Der Vorgang ist reversibel, d.h. nach dem Abschalten des Magnetfeldes kehrt das MRE und damit der Formkörper 4 in seinen Ausgangszustand wie in Fig. 3a) zurück. Beim Blockieren kann das Medium in den Kammern a und b nicht mehr komplett oder nur mit hohem Kraftaufwand durch den Strömungskanal 5 gefördert werden. Das Verschieben des Innenkolbens 6 gegen die Außenhülle 2 ist wegen der entstehenden Druckdifferenz zwischen den Kammern a und b gehemmt.

Bei den in Figuren 1 bis 3 gezeigten Ausgestaltungen lässt sich eine erfindungsgemäße Blockierung der Teile per Kraftschluss und mit pneumatisch-hydraulischen Mitteln kombinieren. Zum einen kann der Formkörper 4 in Fig. 3b) mit Druck und daher kraftschlüssig an der Kolbenstange 1 anliegen. Zum anderen kann in den eventuell vorhandenen Zwischenraum zu den beiden Seiten der Spule 3 in Figur 1 auch ein fluides Medium, z. B. ein Gas oder eine Flüssigkeit, eingefüllt werden, welches im gelösten Zustand der Vorrichtung in Fig. 1a) zwischen der Seitenwand der Spule 3 und der Außenhülle 2 fließen kann und im geschlossenen Zustand in Fig. 1b) nicht.

In Fig. 4a) ist eine vorteilhafte Weiterbildung der dritten Ausgestaltung dargestellt. Der innere Kolben 6 ist um eine Schutzplatte 7 stirnseitig über dem Formkörper 4 erweitert. MRE sind in der Regel weiche Materialien, welche durch hohe mechanische Belastungen zerstört werden können. Die Schutzplatte 7 ist als radial passendes Element mit Ausnehmungen als Einströmöffnungen für den Strömungskanal 5 ausgeführt (siehe hierzu Schnitt A-A. Anstatt Bohrungen können auch ovale Kanäle oder Ähnliches vorgesehen sein). Das MRE des Formkörpers 4 wird durch die Schutzplatte 7 zusätzlich fixiert und vor mechanischer Beschädigung geschützt.

In Fig. 4b) ist diese Weiterbildung im blockierten Zustand dargestellt. Der Innenkolben 6 bildet zusammen mit dem Formkörper 4 und der Kolbenstange 1 einen Magnetkreis aus. Durch das Anlegen des Magnetfeldes dehnt sich der Formkörper 4 radial aus und versperrt die Einströmöffnungen zum Strömungskanal 5. Hier ist je nach Stärke des angelegten Magnetfeldes eine teilweise oder vollständige Verschließung der Einströmöffnungen möglich. Durch das Verschließen kann das Medium nur noch langsam oder gar nicht mehr von Kammer a in Kammer b und umgekehrt strömen. Aufgrund der Druckdifferenz, die sich zwischen den Kammern a und b beim versuchten Verschieben des Innenkolbens 6 rasch aufbaut, blockiert die Feststell- und Lösevorrichtung bzw. wird die Verschiebung des Innenkolbens 6 gegen die Außenhülle 2 gehemmt.

Eine vierte Ausgestaltung ist in Fig. 5 dargestellt. In Fig. 5a) ist eine Außenhülle 2 gezeigt, die gegen den inneren Aufbau horizontal entlang der Rotationsachse R verschiebbar ist. Der Innenkolben 6 besteht aus einem magnetfelderzeugenden Element 3 (hier durch eine Spule dargestellt, kann aber auch durch einen Permanentmagneten oder eine Kombination daraus ersetzt werden), mindestens einem Formkörper 4, einer Schutzplatte 7, einem Federelement 8, einem mechanischem Element 9 mit Einströmöffnungen, gegen das sich das Federelement 8 abstützt, und der Kolbenstange 1. Die inneren Elemente sind so angeordnet, dass sich wie in Fig. 3a) oder 4a) ein Strömungskanal 5 ausbildet. Durch den gesamten Aufbau ergeben sich zwei Kammern (a und b), welche mit einem Gas, einem hydraulischen Medium etc. gefüllt sein können.

Fig. 5b) zeigt die vierte Ausgestaltung der Feststell- und Lösevorrichtung im blockierten Zustand. Die Kolbenstange 1, der Formkörper 4 und der Innenkolben 6 bilden einen magnetischen Kreis aus. Der Formkörper 4 dehnt sich radial aus und verkürzt sich in der axialen Breite. Somit wandert die Schutzplatte 7 in Richtung der Mitte des Feststellers und verringert bzw. verschließt den Strömungskanal 5. Je nach Stärke des angelegten Magnetfeldes ist ein teilweises oder vollständiges Verschließen des Strömungskanals 5 möglich. Die Schutzplatte 7 ist so ausgeführt, dass sie im vollständig verschlossenen Zustand eine kraftschlüssige Verbindung mit der konisch ausgeführten Kolbenstange 1 eingeht und auf diese Weise eine mechanische Blockierung der relativen Bewegung der Kolbenstange 1 und des Innenkolbens 6 entlang der Symmetrieachse R hervorruft. Die Bewegung der Schutzplatte 7 wird durch das Federelement 8 unterstützt, welches sich gegen das mechanische Element 9 mit den Einströmöffnungen abstützt. Durch das Verschließen kann keine Strömung mehr von der Kammer a in die Kammer b stattfinden bzw. sie wird durch eine Verkleinerung des Strömungskanals 5 durch den Formkörper 4 gehemmt. Infolgedessen wird die relative Bewegung der Außenhülle 2 und des Innenkolbens 6 bzw. der damit kraftschlüssig verbundenen Kolbenstange 1 blockiert. Der Vorgang ist reversibel.

Die in Figuren 1 bis 5 gezeigten Ausgestaltungen zeigen rotationssymmetrische Anordnungen. Betrachtet man nur die jeweils obere Hälfte einer jeden Figur und liest die Figur jeweils als Querschnitt durch eine sich in Richtung aus der Zeichnungsebene erstreckende Vorrichtung, so gilt das geschilderte Prinzip für die Blockade bzw. Freigabe der relativen Translationsbewegung der Teile 1 und 2 bzw. 20 in Richtung R jeweils auch für eine solche Vorrichtung ohne Rotationssymmetrie. Das magnetfelderzeugende Element 3 kann in diesem Fall z. B. ein Permanentmagnet sein.

In den Ausführungen zu den weiteren Figuren sind diejenigen Komponenten nicht mehr explizit erläutert, die bzw. soweit sich diese aus der voranstehenden Figurenbeschreibung ergeben.

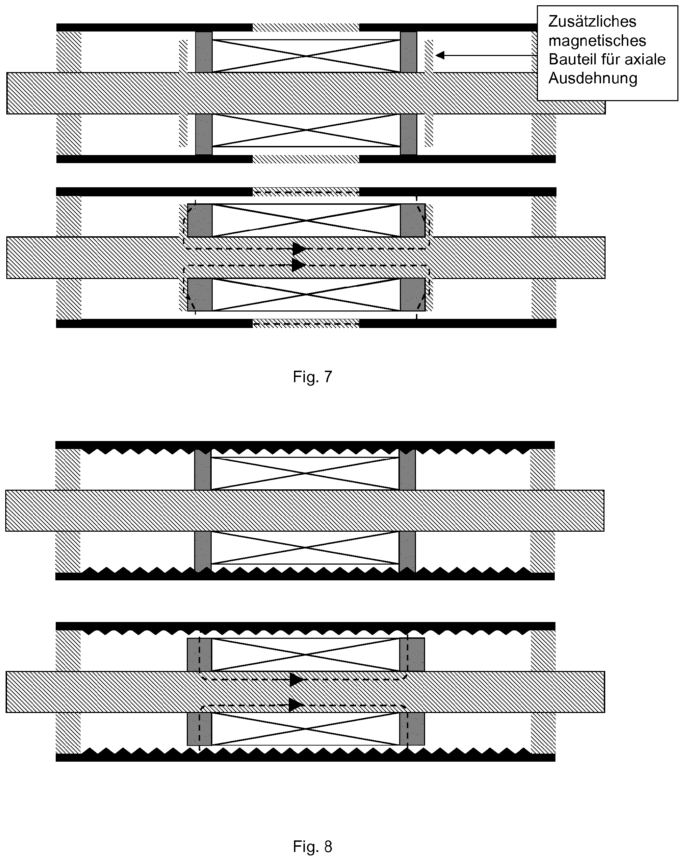

Während in Fig. 2 und 6 die Lösung der Teile durch eine radiale Stauchung gezeigt ist, erfolgt sie nach der Ausgestaltung der Fig. 7 durch eine axiale Ausdehnung bei Anlegen des Magnetfelds. Hierbei ist jeweils neben dem Formkörper ein zusätzliches magnetisches Teil erforderlich, an welches der Formkörper bei Aktivierung herangezogen wird. Das Magnetfeld läuft nun über das zusätzliche Bauteil, durch den Formkörper und schließt sich über das symmetrische Gegenstück auf der anderen Seite. Hierbei ist es wichtig, dass zwischen dem Formkörper und dem zusätzlichen Bauteil ein Luftspalt ist, da dieser bei Aktivierung des Formkörpers durch das Magnetfeld durch den Formkörper gefüllt wird, da dieser sich radial zusammenzieht, aber axial ausdehnt. Man kann in diesem Fall von einer aktiven axialen Ausdehnung sprechen. In der Ausgestaltung der Figur 7 ist wiederum beispielhaft die nichtmagnetische Außenhülle durch ein magnetisches Joch unterbrochen dargestellt, was die Magnetflussführung für den Lösevorgang verbessert.

In beiden Fällen der radialen bzw. axialen Ausdehnung ist es möglich, zwei form- und/oder kraftschlüssig verbundene Bauteile gegeneinander zu lösen, um so eine Rotation oder Translation zu ermöglichen.

Eine Variante, die bei Fehlen eines Magnetfeldes ein formschlüssiges Anliegen des Formkörpers an der inneren Wand des äußeren, relativ zum inneren Teil beweglichen Teils aufweist, ist in Fig. 8 gezeigt. Unter Einfluss eines Magnetfeldes wie durch die Pfeile gezeigt erfolgt die Lösung der Vorrichtung. In der Darstellung dieser Figur ist die Wand profiliert dargestellt; ein relativ weiches magnetorheologisches Elastomer passt sich bei Andrücken dieser Form an. Alternativ ist es möglich, dass das magnetorheologische Elastomer selbst ebenfalls profiliert ist derart, dass die Profile formschlüssig ineinandergreifen können. Eine weitere Variante nutzt einen profilierten Aufsatz auf derjenigen Seite des MRE, die an dem beweglichen Teil zu liegen kommen soll.

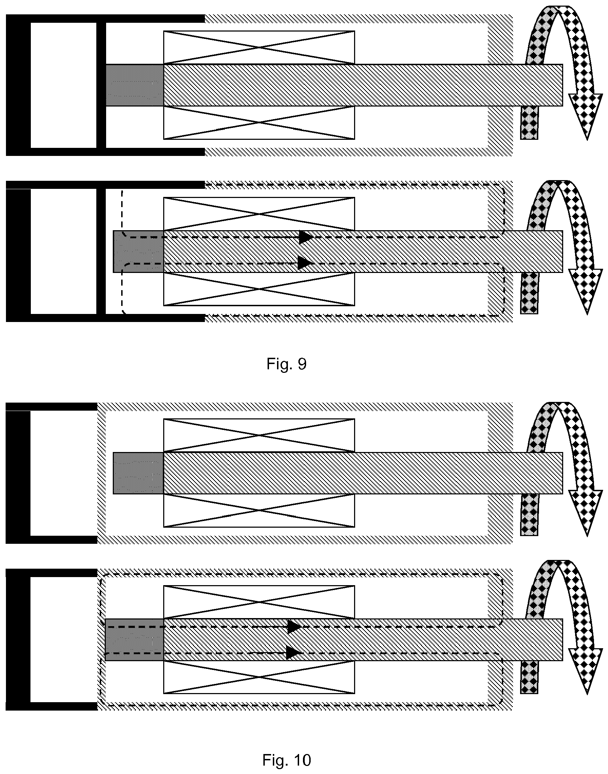

Eine weitere Ausgestaltung ist in Fig. 9 als Lösevorrichtung dargestellt. Hier klemmt das MRE die mittlere Stange o. dgl. nicht radial gegenüber dem Außenteil, sondern in axialer Richtung zentrisch von der Stange (Mitteljoch) gegen ein mit dem Gehäuse verbundenes nichtmagnetisches Bauteil (Scheibe). Dies geht auch umgekehrt (Fig. 10), wenn die Scheibe magnetisch ist und der MRE Formkörper sich dort heranziehen kann. Es sei darauf hingewiesen, dass diese beiden Ausgestaltungen rotatorisch funktionieren.

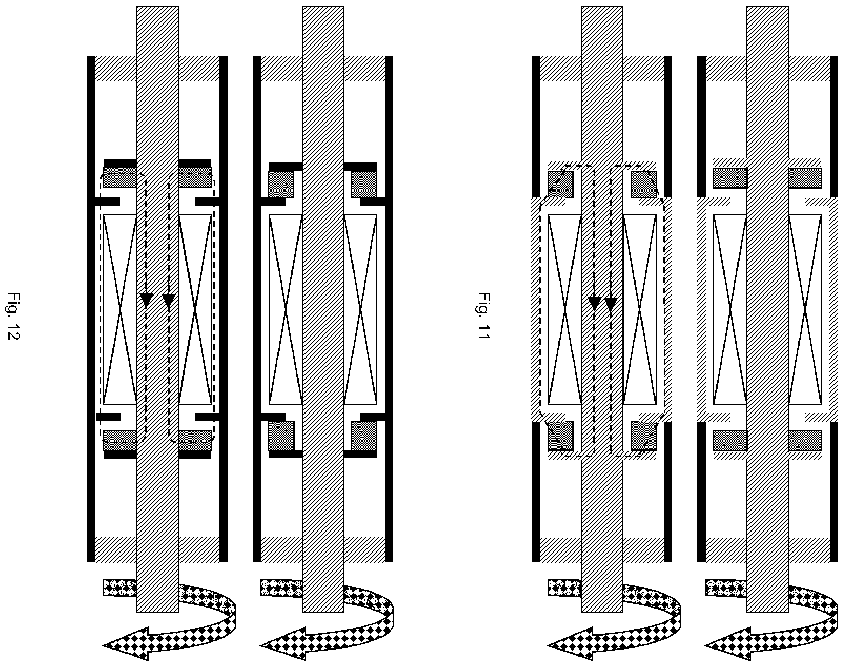

Fig. 11 zeigt eine Blockiervorrichtung, die vorzugsweise rotatorisch ist, welche ebenfalls mit einer axialen Ausdehnung des MRE-Körpers arbeitet. Durch die zusätzlichen magnetischen Bauteile wird der MRE-Formkörper unter Einwirkung des Magnetfeldes axial gedehnt und verbindet die beiden zuvor zueinander beweglichen Teile, so dass eine Blockade entsteht. Fig. 12 zeigt das gleiche Konzept, allerdings als Lösevorrichtung und ohne magnetisches Außenjoch. Hier wird bei Anlegen eines Magnetfeldes der MRE-Formkörper nach innen gezogen und gibt die vorher verbundenen Teile frei, so dass sie zueinander beweglich werden.

Ähnlich zu diesen beiden Ausgestaltungen ist in Fig. 13 eine Ausgestaltung mit axialer Ausdehnung des MRE-Formkörpers gezeigt. Der obere Figurenteil zeigt die magnetfeldfreie blockierte Stellung, der untere die gelöste Stellung unter Einfluss des Magnetfelds.

Fig. 14 zeigt eine besondere Ausgestaltung unter Verwendung eines Elektromagneten in Kombination mit einem schaltbaren Hartmagneten (mittig im mittleren Teil 1 angeordnet) mit radialer Ausdehnung des MRE-Formkörpers. Der obere Figurenteil zeigt den gelösten Zustand ohne Magnetfeld; der Hartmagnet ist entmagnetisiert. Der untere Figurenteil zeigt die (bleibende) Blockierung der Vorrichtung durch die Magnetisierung des Hartmagneten, die durch einen zuvor angelegten, dann abgeschalteten Spulenstrom im Elektromagneten verursacht wurde.

## Patentansprüche

1. Feststell- und Lösevorrichtung, die
zwei relativ zueinander bewegliche Teile aufweist, **dadurch gekennzeichnet, dass** sie mindestens einen Formkörper aus einem magnetorheologischen Elastomer (MRE) und ein Magnetkreissystem mit mindestens einem magnetfelderzeugenden Element aufweist,
wobei der mindestens eine Formkörper Bestandteil des Magnetkreissystems ist und derart ausgebildet ist, dass er sich beim Anlegen oder Verändern eines Magnetfeldes
- entweder derart ausdehnt, dass die relative Bewegung der Teile durch Kraftschluss und/oder Formschluss blockiert wird,
- oder sich derart zusammenzieht, dass ausgehend von einer durch Kraftschluss und/oder Formschluss bestehenden Blockade die relative Bewegung der Teile freigegeben wird.

2. Feststell- und Lösevorrichtung nach Anspruch 1, worin das MRE beim Anlegen bzw. Verändern des Magnetfeldes eine relative Ausdehnung bzw. Kontraktion von wenigstens 1%, vorzugsweise von bis zu 5% und stärker bevorzugt von 5% bis 10% besitzt.

3. Feststell- und Lösevorrichtung nach Anspruch 1 oder 2, bei der der mindestens eine Formkörper in einer Blockadestellung der Feststell- und Lösevorrichtung unmittelbar oder mittels eines Zusatzteils kraftschlüssig an den Teilen anliegt, wobei der Kraftschluss zwischen dem mindestens einen Formkörper und einem der Teile auf einem Formschluss beruht.

4. Feststell- und Lösevorrichtung nach einem der voranstehenden Ansprüche, bei der der mindestens eine Formkörper zwischen den Teilen angeordnet ist.

5. Feststell- und Lösevorrichtung nach einem der voranstehenden Ansprüche, bei der einer der beiden Teile den anderen der beiden Teile zumindest weitgehend umschließt, wobei der mindestens eine Formkörper vorzugsweise ringförmig, gegebenenfalls bezüglich der gemeinsamen Drehachse, ausgebildet ist und gegebenenfalls Ausnehmungen und/oder Vorsprünge aufweist.

6. Feststell- und Lösevorrichtung nach einem der voranstehenden Ansprüche, bei der im gelösten Zustand der eine Teil gegenüber dem anderen Teil translatorisch bezüglich einer Translationsachse und/oder rotatorisch bezüglich einer Rotationsachse verschoben werden kann.

7. Feststell- und Lösevorrichtung nach Anspruch 6, bei der sich der mindestens eine Formkörper beim Einschalten oder Abschalten des Magnetfeldes entweder weitgehend parallel oder weitgehend senkrecht zur Translations- bzw. Rotationsachse ausdehnt.

8. Feststell- und Lösevorrichtung nach einem der voranstehenden Ansprüche, die einen mit einem fluiden Medium, insbesondere mit einem Gas oder einem hydraulischen Medium, gefüllten Zwischenraum zwischen den Teilen aufweist, wobei vorzugsweise der Zwischenraum zwei durch einen Fluidkanal verbundene Kammern aufweist und der mindestens eine Formkörper in der Blockadestellung der Feststell- und Lösevorrichtung den Fluidkanal zumindest teilweise verschließt.

9. Feststell- und Lösevorrichtung nach einem der voranstehenden Ansprüche, bei der der mindestens eine Formkörper an seinen nicht zum Anliegen an den Teilen vorgesehenen Stirnflächen durch mindestens eine Wand mechanisch geschützt wird, wobei die mindestens eine Wand vorzugsweise bezüglich der Teile beweglich ist und besonders bevorzugt mit Druck an dem mindestens einen Formkörper anliegt.

10. Feststell- und Lösevorrichtung nach einem der voranstehenden Ansprüche, die mindestens ein Federelement aufweist, mittels dessen der mindestens eine Formkörper mechanisch vorgespannt ist.

11. Feststell- und Lösevorrichtung nach Anspruch 9 und 10, wobei das mindestens eine Federelement mit der mindestens einen Wand infolge der Verformung des mindestens einen Formkörpers eine formschlüssige Verbindung zwischen den Teilen erzeugen kann, vorzugsweise mittels eines oder mehrerer Zusatzteile.

12. Feststell- und Lösevorrichtung nach einem der voranstehenden Ansprüche, bei der der mindestens eine Formkörper derart ausgebildet ist, dass er sich beim Anlegen oder Verändern des Magnetfelds derart verformen kann, dass er unmittelbar kraftschlüssig an den Teilen anliegt.

13. Verwendung der Feststell- und Lösevorrichtung nach einem der Ansprüche 1 bis 12 zum gesteuerten Blockieren und/oder Freigeben von relativ zueinander beweglichen Bauteilen einer Anlage, insbesondere zum gesteuerten Ver- und/oder Entriegeln einer Tür, eines Tors, eines Fensters, eines Deckels, einer Klappe oder eines ähnlichen Elementes.

14. Verfahren zum gesteuerten Blockieren und/oder Freigeben von relativ zueinander beweglichen Teilen einer Anlage unter Verwendung der Feststell- und Lösevorrichtung nach einem der Ansprüche 1 bis 12, bei dem ein Magnetfeld innerhalb des mindestens einen Formkörpers derart angelegt oder verändert wird, dass sich der mindestens eine Formkörper entweder derart ausdehnt, dass die relative Bewegung der Teile durch Kraftschluss und/oder Formschluss blockiert wird, oder sich derart zusammenzieht, dass ausgehend von einer durch Kraftschluss und/oder Formschluss bestehenden Blockade die relative Bewegung der Teile freigegeben wird, und bei dem vorzugsweise die Stärke der Blockade durch die Variation der Magnetfeldstärke gesteuert wird.

15. Verfahren nach Anspruch 14, bei dem sich der mindestens eine Formkörper im Magnetfeld bezüglich einer Symmetrieachse radial (senkrecht zur Symmetrieachse) oder/und axial (parallel zur Symmetrieachse) ausdehnt und beim Abschalten des Magnetfeldes wieder zusammenzieht, wobei der mindestens eine Formkörper vorzugsweise entweder beim Ausdehnen oder beim Zusammenziehen die Blockierung zwischen den beiden zueinander beweglichen Teilen durch einen Kraftschluss und/oder Formschluss zwischen den beiden Teilen erzeugt.

## Claims

1. Locking and releasing device having two relatively movable parts,
**characterized by** comprising at least one molded shaped body made of a magnetorheological elastomer (MRE) and a magnetic circuit system having at least one magnetic field generating element,
wherein the at least one shaped body is part of the magnetic circuit system and is formed such that it, when applying or changing a magnetic field
- either expands so that the relative movement of the parts is blocked by frictional connection and / or positive locking,
- or contracts in such a way that, starting from a blockage by frictional connection and / or positive locking, the relative movement of the parts is released.

2. Locking and releasing device according to claim 1,
wherein the MRE has a relative expansion or contraction of at least 1%, preferably up to 5% and more preferably from 5% to 10% when applying or changing the magnetic field.

3. Locking and releasing device according to claim 1 or 2,
wherein the at least one molded shape body rests directly or by means of an additional part frictionally against the parts in a blocking position of the locking and releasing device, wherein the frictional connection between the at least one shaped body and one of the parts is based on a positive connection.

4. Locking and releasing device according to one of the preceding claims,
wherein the at least one shaped body is arranged between the parts.

5. Locking and releasing device according to one of the preceding claims,
wherein one of the two parts at encloses the other of the two parts at least essentially, wherein the at least one shaped body is preferably annular, optionally with respect to the common axis of rotation, and optionally further comprises recesses and/or projections.

6. Locking and releasing device according to one of the preceding claims,
wherein, in the released state, the one part is movable relative to the other part translationally with respect to a translation axis and/or rotationally with respect to a rotation axis.

7. Locking and releasing device according to claim 6,
wherein, when switching on or switching off the magnetic field, the at least one shaped body expands largely parallel or largely perpendicular to the translation- or rotation axis.

8. Locking and releasing device according to one of the preceding claims,
having a space between the parts filled with a fluid medium, in particular with a gas or a hydraulic medium, wherein space has preferably two chambers connected by a fluid channel and the at least one shaped body closes the fluid channel at least partially in the blocking position of the locking and releasing device.

9. Locking and releasing device according to one of the preceding claims,
wherein the at least one shaped body is mechanically protected by at least one wall at its end faces not designed to abut against the parts, wherein the at least one wall is preferably movable relative to the parts, particularly preferred by pressure applied to the at least one shaped body.

10. Locking and releasing device according to one of the preceding claims,
further comprising at least one spring element, by means of which the at least one shaped body is mechanically biased.

11. Locking and releasing device according to claim 9 and 10,
wherein, due to the deformation of the at least one shaped body, the at least one spring element together with the at least one wall can produce a positive connection between the parts, preferably by means of one or more additional parts.

12. Locking and releasing device according to one of the preceding claims,
wherein the at least one shaped body is formed such that, when applying or changing the magnetic field, it can deform such that it rests directly frictionally on the parts.

13. Use of the locking and releasing device according to one of claims 1 to 12 for the controlled blocking and/or releasing of relatively movable components of a system, in particular for controlled locking and/or unlocking of a door, a gate, a window, a lid, a flap or similar element.

14. A method for the controlled blocking and/or releasing of relatively movable parts of a plant using the locking and releasing device according to one of claims 1 to 12, wherein a magnetic field within the at least one shaped body is applied or changed so that the at least one shaped body either expands so that the relative movement of the parts is blocked by frictional connection and/or positive locking, or contracts such that, starting from a blocking by frictional connection and/or positive locking, the relative movement of the parts is released, and in which preferably the strength of the blocking is controlled by the variation of the magnetic field strength.

15. The method of claim 14, wherein the at least one shaped body expands radially with respect to an axis of symmetry (perpendicular to the axis of symmetry) and/or axially (parallel to the symmetry axis) in the magnetic field and contracts again when switching off the magnetic field, wherein the at least one shaped body produces the locking between the two mutually movable parts by a frictional connection and/or positive connection between the two parts preferably either when expanding or contracting.

## Revendications

1. Dispositif d'immobilisation et de libération, qui comporte deux pièces mobiles l'une par rapport à l'autre, **caractérisé en ce qu'**il présente au moins un corps moulé constitué d'un élastomère magnétorhéologique (MRE) et un système de circuit magnétique pourvu d'au moins un élément générant un champ magnétique, dans lequel ledit au moins un corps moulé fait partie du système de circuit magnétique et est réalisé de telle manière qu'il puisse, lorsqu'un champ magnétique est activé ou modifié:
- soit subir une dilatation, de telle manière que le mouvement relatif des pièces soit bloqué par adhérence et/ou par emboîtement,
- soit subir une contraction, de telle manière que, en partant d'un blocage existant par adhérence et/ou par emboîtement, le mouvement relatif des pièces soit libéré.

2. Dispositif d'immobilisation et de libération selon la revendication 1, dans lequel le MRE présente, lors de l'activation ou de la modification du champ magnétique, une dilatation ou une contraction relative d'au moins 1 %, de préférence jusqu'à 5 % et de préférence encore de 5 % à 10 %.

3. Dispositif d'immobilisation et de libération selon la revendication 1 ou 2, dans lequel, dans une position de blocage du dispositif d'immobilisation et de libération, ledit au moins un corps moulé s'applique par adhérence sur les pièces soit directement soit au moyen d'une pièce supplémentaire, dans lequel l'adhérence entre ledit au moins un corps moulé et une des pièces repose sur un emboîtement.

4. Dispositif d'immobilisation et de libération selon l'une quelconque des revendications précédentes, dans lequel ledit au moins un corps moulé est disposé entre les pièces.

5. Dispositif d'immobilisation et de libération selon l'une quelconque des revendications précédentes, dans lequel une des deux pièces entoure au moins largement l'autre des deux pièces, dans lequel ledit au moins un corps moulé est réalisé de préférence sous forme annulaire, éventuellement par rapport à l'axe de rotation commun, et présente éventuellement des creux et/ou des saillies.

6. Dispositif d'immobilisation et de libération selon l'une quelconque des revendications précédentes, dans lequel dans l'état libéré une pièce peut être déplacée par rapport à l'autre pièce en translation par rapport à un axe de translation et/ou en rotation par rapport à un axe de rotation.

7. Dispositif d'immobilisation et de libération selon la revendication 6, dans lequel ledit au moins un corps moulé se dilate soit largement parallèlement soit largement perpendiculairement à l'axe de translation ou à l'axe de rotation lors de l'activation ou de la désactivation du champ magnétique.

8. Dispositif d'immobilisation et de libération selon l'une quelconque des revendications précédentes, qui présente entre les pièces un espace intermédiaire, qui est rempli d'un milieu fluide, en particulier d'un gaz ou d'un milieu hydraulique, dans lequel l'espace intermédiaire présente de préférence deux chambres reliées par un canal de fluide et ledit au moins un corps moulé obture au moins partiellement le canal de fluide dans la position de blocage du dispositif d'immobilisation et de libération.

9. Dispositif d'immobilisation et de libération selon l'une quelconque des revendications précédentes, dans lequel ledit au moins un corps moulé est mécaniquement protégé par au moins une paroi sur ses faces frontales non prévues pour l'application sur les pièces, dans lequel ladite au moins une paroi est de préférence mobile par rapport aux pièces et de préférence encore s'applique avec une pression sur ledit au moins un corps moulé.

10. Dispositif d'immobilisation et de libération selon l'une quelconque des revendications précédentes, qui présente un élément de ressort, au moyen duquel ledit au moins un corps moulé est mécaniquement précontraint.

11. Dispositif d'immobilisation et de libération selon la revendication 9 et 10, dans lequel ledit au moins un élément de ressort peut produire un assemblage par emboîtement entre les pièces avec ladite au moins une paroi par suite de la déformation dudit au moins un corps moulé.

12. Dispositif d'immobilisation et de libération selon l'une quelconque des revendications précédentes, dans lequel ledit au moins un corps moulé est réalisé de telle manière qu'il puisse se déformer, lors de l'activation ou de la modification du champ magnétique, de telle manière qu'il s'applique directement par adhérence sur les pièces.

13. Utilisation du dispositif d'immobilisation et de libération selon l'une quelconque des revendications 1 à 12 pour le blocage et/ou la libération sur commande de pièces d'une installation mobiles l'une par rapport à l'autre, en particulier pour le verrouillage et/ou le déverrouillage sur commande d'une porte, d'un portail, d'une fenêtre, d'un couvercle, d'un clapet ou d'un élément similaire.

14. Procédé permettant de bloquer et/ou de libérer sur commande des pièces d'une installation mobiles l'une par rapport à l'autre en utilisant le dispositif d'immobilisation et de libération selon l'une quelconque des revendications 1 à 12, dans lequel on active ou on modifie un champ magnétique à l'intérieur dudit au moins un corps moulé, de telle manière que ledit au moins un corps moulé soit se dilate de telle manière que le mouvement relatif des pièces soit bloqué par adhérence et/ou par emboîtement soit se contracte de telle manière que, à partir d'un blocage causé par adhérence et/ou par emboîtement, le mouvement relatif des pièces soit libéré, et dans lequel on commande de préférence la force du blocage par la variation de l'intensité du champ magnétique.

15. Procédé selon la revendication 14, dans lequel ledit au moins un corps moulé dans le champ magnétique se dilate par rapport à un axe de symétrie radialement (perpendiculairement à l'axe de symétrie) et/ou axialement (parallèlement à l'axe de symétrie) et se contracte de nouveau lors de la désactivation du champ magnétique, dans lequel ledit au moins un corps moulé produit de préférence soit lors de la dilatation soit lors de la contraction le blocage entre les deux pièces mobiles l'une par rapport à l'autre par adhérence et/ou par emboîtement entre les deux pièces.
